Europäisches Patentamt

European Patent Office

Office européen des brevets

(11) Veröffentlichungsnummer: **0 404 984 B1**

## EUROPÄISCHE PATENTSCHRIFT

(45) Veröffentlichungstag der Patentschrift: **24.03.93**

(51) Int. Cl.⁵: **G01H 9/00**

(21) Anmeldenummer: **89111869.7**

(22) Anmeldetag: **29.06.89**

(54) **Verfahren und Vorrichtung zur Abbildung und Vermessung elastischer Wellen mit einer Lasersonde.**

(43) Veröffentlichungstag der Anmeldung:
**02.01.91 Patentblatt 91/01**

(45) Bekanntmachung des Hinweises auf die Patenterteilung:
**24.03.93 Patentblatt 93/12**

(84) Benannte Vertragsstaaten:
**DE FR GB IT**

(56) Entgegenhaltungen:
**GB-A- 817 683**
**GB-A- 2 196 121**

**FUNKSCHAU, Band 52, Nr. 8, April 1980, Seiten 83-87, München, DE; "Beobachtung von akustischen Oberflächen- und Körperwellen"**

**IEEE TRANSACTIONS ON SONICS AND ULTRASONICS, Band SU-25, Nr. 6, November 1978, Seiten 372-377, New York, US; H. ENGAN: "Phase sensitive laser probe for high-frequency surface acoustic wave measurements"**

(73) Patentinhaber: **SIEMENS AKTIENGESELL-SCHAFT**
**Wittelsbacherplatz 2**
**W-8000 München 2(DE)**

(72) Erfinder: **Sölkner, Gerald, Dr. Dipl.-Ing.**
**Naupliaallee 12**
**W-8012 Ottobrunn(DE)**

## Beschreibung

Die Erfindung betrifft ein Verfahren zur Abbildung und Vermessung elastischer Wellen sowie eine Vorrichtung zur Durchführung des Verfahrens.

Bauelemente, in denen elastische Wellen, insbesondere akustische Oberflächenwellen, durch Wandlerstrukturen auf piezoelektrischen Materialien angeregt und detektiert werden, gewinnen in der Nachrichten- und Hochfrequenztechnik zunehmend an Bedeutung, zumal die Planartechnologie eine sehr genaue und preiswerte Herstellung dieser mit Hilfe der Methoden des Computer Aided Design (CAD) optimierten Systeme erlaubt. Da die zur Berechnung der Wellenausbreitung verwendeten Modelle nicht alle physikalischen Effekte (Reflexionen an Kanten, Beugungserscheinungen usw.) berücksichtigen, ergeben sich häufig Abweichungen zwischen realisiertem und gewünschtem Bausteinverhalten. Zur Verbesserung der CAD-Modelle ist es daher notwendig, das Wellenfeld im Bauelement phasengenau abzubilden bzw. die die elastische Welle charakterisierenden Parameter (Amplitude, Phase, Ausbreitungsgeschwindigkeit) ortsaufgelöst zu messen.

Aus IEEE Transactions on Sonics and Ultrasonics, Vol. SU-25, No. 6 (1978) Seite 372 bis 377 ist ein Verfahren zur Abbildung akustischer Oberflächenwellen bekannt, bei dem die durch die periodische Deformation der Substratoberfläche verursachte Ablenkung eines das OFW-Bauelement punktweise abtastenden Laserstrahls nachgewiesen wird. Da elastische Scher- und Volumenwellen keine Ondulation der Oberfläche hervorrufen, lassen sich diese Wellen mit dem bekannten Verfahren nicht abbilden.

Die GB-A-2 196 121 beschreibt ein Verfahren zur Sichtbarmachung von Ultraschallwellen in Flüssigkeits-Festkörpersystemen, das die Vorteile der sogenannten Schlierenmethode und der photoelastischen Meßtechnik in sich vereinigt. Erreicht wird dies durch eine aus Polarisatoren bestehende Schneidenblende, die die in einer konventionellen Meßvorrichtung vorhandene Metallblende ersetzt. Durch Beleuchtung der transparenten Probenkammer mit polarisiertem Licht bildet sich somit die Möglichkeit, die Ausbreitung von Ultraschallimpulsen in der Probenkammerflüssigkeit und gleichzeitig auch in dem in der Kammer angeordneten Testkörper zu beobachten. Da das Verfahren auf dem Stroboskopieeffekt beruht, kann man die Ultraschallimpulse im Flüssigkeits-Festkörpersystem zu einem beliebig vorgebbaren Zeitpunkt nach der Impulserzeugung im Ultraschallsender abbilden. Das bekannte Verfahren dient der Lokalisierung von Rissen und Bruchstellen im Testkörper. Diese Störstellen lassen sich dadurch erkennen, daß in den betroffenen Bereichen eine Reflexion der Ultraschallimpulse auftritt.

Der Erfindung liegt die Aufgabe zugrunde, ein Verfahren anzugeben, mit dem elastische Scher- und Volumenwellen in piezoelektrischen Materialen phasengenau abgebildet und vermessen werden können. Eine Vorrichtung zur Durchführung des Verfahrens soll insbesondere eine große Bandbreite aufweisen. Diese Aufgaben werden erfindungsgemäß durch ein Verfahren nach Patentanspruch 1 und eine Vorrichtung nach Patentanspruch 7 gelöst.

Der mit der Erfindung erzielbare Vorteil besteht insbesondere darin, daß auch der Einfluß der durch die Wandlerstrukturen angeregten Volumenwellen auf das Bausteinverhalten untersucht werden kann. Außerdem erlaubt die Erfindung Messungen an OFW-Bauelementen, die bei Frequenzen oberhalb von etwa 5 bis 10 GHz arbeiten.

Die Erfindung wird im folgenden anhand der Zeichnungen erläutert. Hierbei zeigt:

Fig. 1     eine Vorrichtung zur Abbildung elastischer Volumenwellen

Fig. 2     den Einfluß der Doppelbrechung auf einen linear polarisierten Laserstrahl

Fig. 3     eine Vorrichtung zur Abbildung elastischer Scherwellen

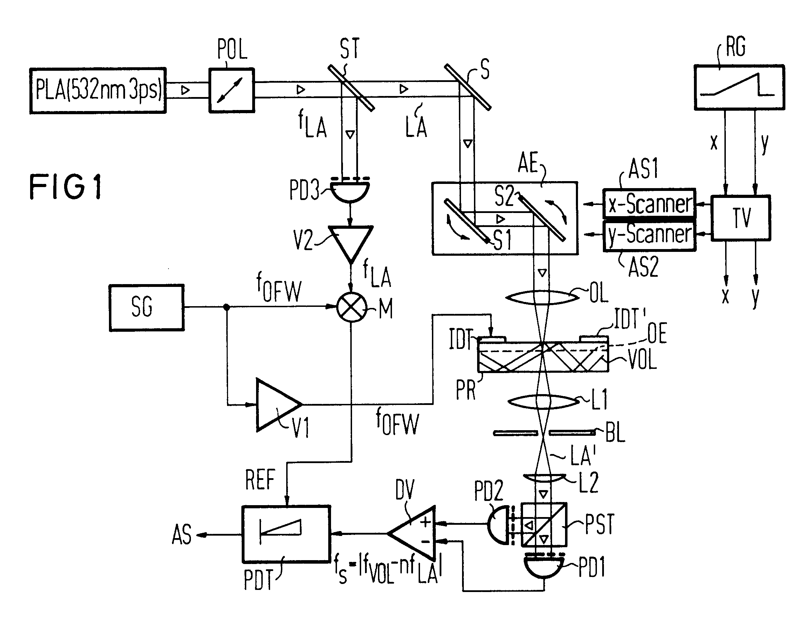

Die Fig. 1 zeigt den schematischen Aufbau einer Vorrichtung zur Abbildung elastischer Volumenwellen VOL in einem OFW-Bauelement PR (z. B. ZF-Filter, Konvolver oder Impulskompressor), dessen Interdigitalwandler IDT von einem Signalgenerator SG unter Zwischenschaltung eines Verstärkers V1 angesteuert wird. Die an den Elektroden des Wandlers IDT anliegende Wechselspannung der Frequenz $f_{OFW}$ führt über den piezoelektrischen Effekt zu einer periodischen Deformation der Kristalloberfläche, die sich als akustische Welle mit einer Geschwindigkeit von etwa 3000 bis 4000 m/s über das Bauelement PR ausbreitet. Diese Welle, deren Frequenz der Frequenz $f_{OFW}$ des den Wandler IDT ansteuernden Signals entspricht, dringt bis zu einer Tiefe $d \tau \lambda_{OFW}$ ($\lambda_{OFW}$: = Wellenlänge der akustischen Oberflächenwelle) in den Kristall ein, wobei die Amplitude der Oberflächenschwingung etwa 0,1 bis 10 Å beträgt. Neben den Oberflächenwellen (Raleigh-Wellen) werden aber auch elastische Volumenwellen VOL angeregt die sich im Kristall ausbreiten, um nach einigen Reflexionen an den Grenzflächen im Empfangswandler IDT′ ein Störsignal zu erzeugen. Zum Nachweis der durch akustische Volumenwellen VOL der Frequenz $f_{VOL}$ = m • $f_{OFW}$ (m: = natürliche Zahl) hervorgerufenen Änderung der Doppelbrechung des Kristalls bedient man sich eines linear polarisierten Laserstrahls LA, den man in einem dem Polarisator POL vorgelagerten optischen Impulsgenerator PLA erzeugt, an einem Spiegel S in Richtung der aus zwei hochgenauen Galvanometerspiegeln S1, S2 bestehenden Ablenkeinheit AE umlenkt und mit Hilfe eines Linsensystems OL auf eine parallel zur Bauelementoberfläche orientierte Ebene (Objektebene OE) fokussiert. Die Vergrößerung des Linsensystems OL ist hierbei so vorgegeben, daß der Strahldurchmesser d in der Objektebene OE der Bedingung d<λ (λ:= Wellenlänge der Volumenwelle VOL) genügt. Die die Position des Laserfokus innerhalb der Objektebene OE definierenden Ablenkspannungen erzeugt man in einem Rastergenerator RG dessen in einem Tandemverstärker TV verstärkten Ausgangssignale an den den Galvanometerspiegeln S1 und S2 zugeordneten Ansteuereinheiten AS1 und AS2 anliegen.

Der optische Impulsgenerator PLA besteht vorzugsweise aus einem modengekoppelten Nd:YAG-Laser (Spectra Physics, Modell 3800: λ = 1064 nm, Impulsbreite $\tau_p$ = 80 ps, Impulswiederholfrequenz: $f_{LA}$ = 82 MHz), einem Impulskompressor (Spectra-Physics, Modell 3600) zur Verringerung der Breite der Nd:YAG-Laserimpulse auf $\tau_p$ < 5 ps sowie einem frequenzverdoppelnden KTP-Kristall, der die Wellenlänge der Laserstrahlung auf λ = 532 nm halbiert. Die Verwendung dieser eine Impulsleistung W≈2 kW (mittlere Leistung: $\overline{W}$≈500 mW) aufweisende Pikosekunden-Laserquelle gewährleistet ein hohes zeitliches Auflösungsvermögen, wobei die Zeitstruktur der Laserimpulse ($\tau_p$≈3 ps) dem Meßverfahren eine für die Untersuchung moderner OFW-Bauelemente notwendige Bandbreite > 10 GHz verleiht.

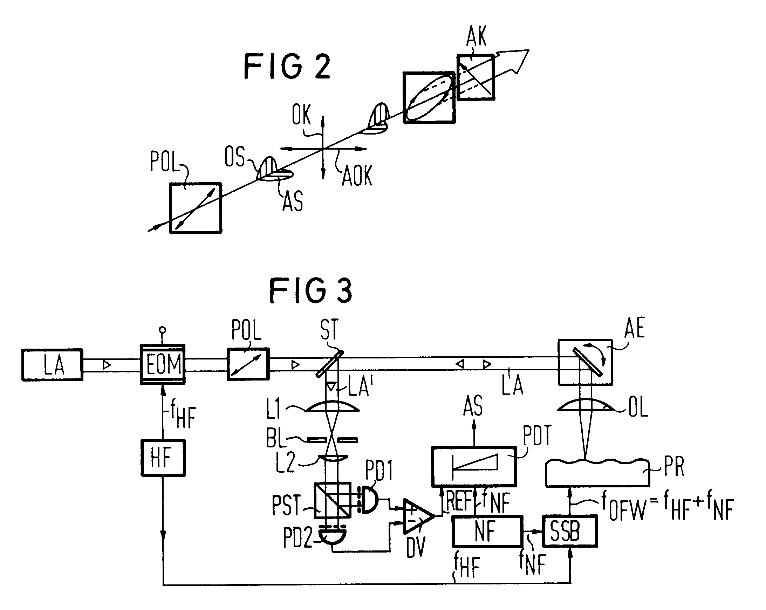

Da mit der Anregung von Volumenwellen VOL auch eine Deformation des Kristalls, d. h. eine Änderung der Doppelbrechung des Substratmaterials einhergeht (akustooptischer Effekt), ist die von dem Bauelement PR transmittierte Laserstrahlung LA′ im allgemeinen nicht mehr linear polarisiert. Wie die Fig. 2 schematisch zeigt (die durch den Polarisator POL definierte Schwingungsebene SE der einfallenden Laserstrahlung sei in einem Winkel α = 45° zu den Kristallachens OK, AOK orientiert), erfahren der ordentliche und der außerordentliche Strahl (dargestellt sind jeweils nur die Halbwellen OS und AS der Projektion auf die Kristallachsen OK, AOK) aufgrund ihrer unterschiedlichen Ausbreitungsgeschwindigkeiten eine Phasenverschiebung, die sich in einer im allgemeinen elliptischen Polarisation der transmittierten Laserstrahlung LA′ äußert. Die hinter einem Analysator AK gemessene Strahlungsintensität ist hierbei phasensynchron mit der an der jeweiligen Meßstelle durchlaufenden Volumenwelle moduliert.

In der Vorrichtung nach Fig. 1 besteht der Analysator aus einem polarisierenden Strahlteiler PST und zwei Photodioden PD1, PD2, deren Ausgangssignale an den Eingängen eines Differenzverstärkers DV anliegen. Dem Strahlteiler PSE ist eine aus den Linsen L1, L2 und der im Brennpunkt der Linse L1 angeordnete Ortsblende BL bestehende konfokale Abbildungsoptik vorgeschaltet, die eine hohe laterale Auflösung gewährleistet. Außerdem besitzt die konfokale Abbildungsoptik eine hohe tiefendiskriminierende Wirkung (Tiefenschärfe ≤0,7λ, λ := Wellenlänge der Laserstrahlung LA), so daß man Rasterbilder von Tiefenschnitten des untersuchten Bauelements PR erstellen kann.

Da die Impulswiederholfrequenz $f_{LA}$ der Laserquelle PLA ungleich der Frequenz $f_{VOL}$ der akustischen Volumenwellen VOL ist, weist das dem Eingang des phasenempfindlichen Detektors PDT zugeführte Ausgangssignal des Differenzverstärkers DV eine Frequenz $f_S$ auf, die sich zu $f_S$ = |$f_{VOL}$ - $nf_{LA}$| (n:= natürliche Zahl) berechnet. Als phasenempfindlicher Detektor PDT kommt insbesondere ein Lock-in-Verstärker in Betracht, an dessen Ausgang ein der Deformation der Kristallachsen proportionales Meßsignal AS auftritt. Dieses Signal AS wird ortsabhängig aufgezeichnet, wobei man die Ortsinformation, d. h. die Koordinaten des Laserfokus innerhalb der Objektebene OE, an den entsprechenden Ausgängen x, y des Tandemverstärkers TV abgreift.

Das dem phasenempfindlichen Detektor PDT zugeführte Referenzsignal REF erzeugt man in einem Mischer M, der eingangsseitig mit dem im Verstärker V2 verstärkten Ausgangssignal einer Photodiode PD3 und dem Ausgangssignal des den Interdigitalwandler IDT ansteuernden Generators SG beaufschlagt ist. Da sich die Intensität der auf die Photodiode PD3 auftreffenden Laserstrahlung (diese koppelt man mit Hilfe des halbdurchlässigen Spiegels ST aus dem Primärstrahl LA aus) mit der durch die Laserquelle PLA vorgegebenen Impulswiederholfrequenz $f_{LA}$ ändert, erzeugt der Mischer M ein Referenzsignal REF, dessen Frequenz $f_{REF}$ der Frequenz $f_S$ des Ausgangssignals des Differenzverstärkers DV entspricht. Beide Signale besitzen eine für die jeweilige Meßstelle zeitlich konstante Phasenverschiebung, deren Betrag vom Ort des Laserfokus innerhalb der Objektebene OE abhängt.

Die Fig. 3 zeigt den schematischen Aufbau einer Vorrichtung zur Abbildung elastischer Scherwellen, die man mit Hilfe eines die Wandlerstruktur des OFW-Bauelements PR ansteuernden Single-Sideband-Modulators SSB anregt. Im Modulator SSB wird dem an einem Eingang anliegenden Ausgangssignal des Hochfrequenzgenerators HF (Frequenz $f_{HF}$ = 100 MHz) ein im Signalgenerator NF erzeugtes niederfrequentes Signal der Frequenz $f_{NF}$ = 100 kHz zugemischt, so daß die angeregten Scherwellen eine Frequenz $f_{OFW}$ = $f_{HF}$ + $f_{NF}$ aufweisen. Zum Nachweis der aufgrund der Deformation der Kristallachsen an der Oberfläche des Bauelements PR hervorgerufenen Änderung der Polarisation der reflektierten Laserstrahlung bedient man sich wiederum einer aus den Linsen L1, L2 und der Ortsblende BL bestehenden konfokalen Optik und der aus Fig. 1 bekannten Analysatoreinheit, die ebenfalls einen polarisierenden Strahlteiler PST und zwei ausgangsseitig mit dem Differenzverstärker DV verbundene Photodioden PD1 und PD2 aufweist. Als phasenempfindlicher Detektor PDT findet ein eingangsseitig mit dem Differenzverstärker DV verbundener Lock-in-Verstärker Verwendung, dessen Referenzeingang mit dem niederfrequenten Ausgangssignal REF des Generators NF beaufschlagt ist. Zur Vermessung des Wellenfeldes tastet man die Oberfläche des Bauelements PR punktweise mit dem linear polarisiertem Laserstrahl ab, wobei das ober beschriebene Ablenksystem AE verwendet wird. Neben der Positionierung des Laserstrahls LA auf der jeweiligen Meßstelle dient das Ablenksystem AE auch der Umlenkung der reflektierten, im allgemeinen elliptisch polarisierten Laserstrahlung LA′ in Richtung des Strahlteilers ST. Als Strahlungsquelle dient ein konventioneller cw-Laser, dem ein elektrooptischer Modulator, beispielsweise eine von dem Hochfrequenzgenerator HF angesteuerte Pockelszelle EOM, und der Polarisator POL nachgeschaltet ist.

Die Laser-Modulatoreinheit kann man selbstverständlich auch durch den oben beschriebenen optischen Impulsgenerator PLA (Pikosekundenlaser) ersetzen, wenn moderne OFW-Bauelemente PR mit Arbeitsfrequenzen oberhalb von etwa 500 MHz untersucht werden sollen. Die Elektronik zur Ansteuerung des Interdigitalwandlers und zur Erzeugung des dem Lock-in-Verstärker PDT zugeführten Referenzsignals REF ist dann entsprechend der in Fig. 1 dargestellten Meßelektronik aufzubauen. Die Vorteile der Verwendung einer Pikosekundenlaserquelle gegenüber modulierten cw-Lasern liegen in der großen Bandbreite (> 5 bis 10 GHz) der hohen Modulationstiefe (100 % gegenüber 3 % bei 1 GHz), der hohen Strahlungsintensität und der damit einhergehenden Verbesserungen des Signal-Rausch-Verhältnisses. Der enorme Zeitaufwand zur Vermessung und Abbildung eines Wellenfeldes wird dadurch erheblich reduziert.

Die Erfindung ist nicht auf die beschriebenen Ausführungsbeispiele beschränkt. So ist es ohne weiteres möglich, den Lock-in-Verstärker durch eine Sample- and Hold-Schaltung zu ersetzen. Zur Ansteuerung der Torschaltung (Gate) verwendet man vorzugsweise ein flankengetriggertes Monoflop, an dessen Eingang das vom Mischer M erzeugte Referenzsignal REF anliegt. Der phasenempfindliche Detektor PDT kann insbesondere in Form einer Boxcar-Einheit realisiert werden.

**Patentansprüche**

1. Verfahren zur Abbildung und Vermessung elastischer Wellen bei dem,
   - elastische Wellen (VOL) der Frequenz $f_{VOL}$ in einer Probe (PR) angeregt werden,
   - die Probe (PR) mit einer polarisierten Lasersonde (LA) beaufschlagt wird,
   - die Intensität der Lasersonde (LA) moduliert wird, wobei die Modulationsfrequenz $f_{LA}$ ungleich der Frequenz $f_{VOL}$ der elastischen Wellen (VOL) gewählt ist,
   - ein Referenzsignal (REF) der Frequenz $f_S$ erzeugt wird, wobei die Frequenz $f_S$ der Bedingung $f_S = | f_{VOL} - nf_{LA} |$ genügt und n eine natürliche Zahl bezeichnet und
   - die durch die elastischen Wellen (VOL) hervorgerufene Änderung der Polarisation der an der Probe (PR) reflektierten oder der von der Probe (PR) transmittierten Laserstrahlung (LA') unter Heranziehung des Referenzsignals (REF) phasenempfindlich bestimmt und ein entsprechendes Meßsignal (AS) aufgezeichnet wird.

2. Verfahren nach Anspruch 1, **dadurch gekennzeichnet,** daß eine konfokale Optik zum Nachweis der reflektierten oder transmittierten Laserstrahlung (LA') verwendet wird.

3. Verfahren nach Anspruch 1 oder 2, **dadurch gekennzeichnet,** daß die reflektierte oder transmittierte Laserstrahlung (LA') in zwei senkrecht zueinander polarisierte Teilstrahlen aufgespalten wird und daß die Differenz der Intensität der beiden Teilstrahlen gemessen wird.

4. Verfahren nach einem der Ansprüche 1 bis 3, **dadurch gekennzeichnet,** daß die Lasersonde (LA) auf die Probenoberfläche oder eine zur Probenoberfläche parallele Ebene (OE) innerhalb der Probe (PR) fokussiert wird, daß die Probenoberflache oder die Ebene (OE) mit der Lasersonde (LA) punktweise abgetastet wird und daß das Meßsignal (AS) ortsabhängig aufgezeichnet wird.

5. Verfahren nach einem der Ansprüche 1 bis 4, **dadurch gekennzeichnet,** daß das Referenzsignal (REF) durch Mischung eines die Frequenz $f_{VOL}$ der elastischen Wellen (VOL) aufweisenden ersten Signals und eines die Modulationsfrequenz $f_{LA}$ aufweisenden zweiten Signals erzeugt wird.

6. Verfahren nach Anspruch 5,
**dadurch gekennzeichnet,** daß die Lasersonde (LA) in einen ersten und einen zweiten Teilstrahl aufgespalten wird, wobei der erste Teilstrahl auf die Probe (PR) und der zweite Teilstrahl auf einen Strahlungsdetektor (PD3) gerichtet wird und daß ein Ausgangssignal des Strahlungsdetektors (PD3) das zweite Signal bestimmt.

7. Vorrichtung zur Abbildung und Vermessung elastischer Wellen die

   - eine Einrichtung (SG, V1, IDT) zur Anregung elastischer Wellen (VOL) in einer Probe (PR),
   - eine Einrichtung (PLA) zur Erzeugung einer polarisierten und intensitätsmodulierten Lasersonde (LA) und
   - eine Einrichtung (OL) zur Fokussierung der Lasersonde (LA) aufweist,
   **gekennzeichnet durch**
   - eine Einrichtung (PD3, V2, M) zur Erzeugung eines Referenzsignals (REF) der Frequenz $f_S$, wobei die Frequenz $f_S$ gemäß der Beziehung $f_S = \mid f_{VOL} - nf_{LA} \mid$ mit $n = 1, 2, 3 \ldots$ von der Frequenz $f_{VOL}$ der elastischen Wellen (VOL) und der Modulationsfrequenz $f_{LA}$ der Lasersonde (LA) abhängt,
   - eine Einrichtung (PST, PD1, PD2, DV) zur Erzeugung eines vor der Polarisation der reflektierten oder transmittierten Laserstrahlung (LA') abhängigen Meßsignals und
   - einen mit dem Referenzsignal (REF) und dem Meßsignal beaufschlagten phasenempfindlichen Detecktor (PDT).

8. Vorrichtung nach Anspruch 7,
**gekennzeichnet durch** ein konfokales optisches System (L1, L2, BL) zur Erfassung der reflektierten oder transmittierten Laserstrahlung (LA').

9. Vorrichtung nach Anspruch 7 oder 8,
**dadurch gekennzeichnet,** daß die Einrichtung zur Erzeugung eines von der Polarisation der reflektierten oder transmittierten Laserstrahlung (LA') abhängigen Meßsignals einen mit der reflektierten oder transmittierten Laserstrahlung (LA') beaufschlagten polarisierenden Strahlteiler (PST), zwei den vom Strahlteiler (PST) erzeugten Teilstrahlen zugeordnete Strahlungsdetektoren (PD1, PD2) und einen mit den Ausgangssignalen der Strahlungsdetektoren (PD1, PD2) beaufschlagten Differenzverstärker (DV) aufweist.

10. Vorrichtung nach einem der Ansprüche 7 bis 9,
**dadurch gekennzeichnet,** daß die Einrichtung zur Erzeugung einer polarisierten und intensitätsmodulierten Lasersonde (LA) einen optischen Impulsgenerator (PLA) aufweist.

11. Vorrichtung nach Anspruch 10,
**gekennzeichnet durch** eine Pikosekunden-Laserquelle als optischer Impulsgenerator.

12. Vorrichtung nach einem der Ansprüche 7 bis 11,
**dadurch gekennzeichnet,** daß die Einrichtung zur Erzeugung des Referenzsignals (REF) einen mit der Lasersonde (LA) beaufschlagten Strahlungsdetektor (PD3) und einen ausgangsseitig mit dem Referenzeingang des phasenempfindlichen Detektors (PDT) verbundenen Mischer (M) aufweist, wobei an einem ersten Eingang des Mischers (M) ein gegebenenfalls verstärktes Ausgangssignal des Strahlungsdetektors (PD3) anliegt, und ein zweiter Eingang des Mischers (M) mit einem Ausgangssignal eines die Einrichtung (IDT) zur Anregung der elastischen Wellen (VOL) ansteuernden Signalgenerators (SG) beaufschlagt ist.

## Claims

1. Method for imaging and measuring elastic waves, in which

   - elastic waves (VOL) of frequency $f_{VOL}$ are excited in a specimen (PR),
   - a polarised laser probe (LA) is applied to the specimen (PR),
   - the intensity of the laser probe (LA) is modulated, the modulation frequency $f_{LA}$ being selected to differ from the frequency $f_{VOL}$ of the elastic waves (VOL),
   - a reference signal (REF) of frequency $f_S$ is generated, the frequency $f_S$ satisfying the condition $f_S = \mid f_{VOL} - nf_{LA} \mid$ and n denoting a natural number, and
   - the change caused by the elastic waves (VOL) in the polarisation of the laser radiation (LA') reflected at the specimen (PR) or transmitted by the specimen (PR) is determined in a phase-sensitive fashion using the reference signal (REF) and a corresponding measurement signal (AS) is recorded.

2. Method according to Claim 1, characterised in that a confocal optical system is used to detect the reflected or transmitted laser radiation (LA').

3. Method according to Claim 1 or 2, characterised in that the reflected or transmitted laser radiation (LA') is split into two component beams polarised perpendicular to one another, and in that the difference in the intensity of the two component beams is measured.

4. Method according to one of Claims 1 to 3, characterised in that the laser probe (LA) is focused onto the specimen surface on a plane (OE) inside the specimen (PR) and parallel to the specimen surface, in that the specimen surface or the plane (OE) is scanned in pointwise fashion by the laser probe (LA), and in that the measurement signal (AS) is recorded as a function of the location.

5. Method according to one of Claims 1 to 4, characterised in that the reference signal (REF) is generated by mixing a first signal having the frequency $f_{VOL}$ of the elastic waves (VOL) and a second signal having the modulation frequency $f_{LA}$.

6. Method according to Claim 5, characterised in that the laser probe (LA) is split into a first and a second component beam, the first component beam being directed onto the specimen (PR) and the second component beam being directed onto a radiation detector (PD3), and in that an output signal of the radiation detector (PD3) determines the second signal.

7. Device for imaging and measuring elastic waves, which has
    - a device (SG, V1, IDT) for exciting elastic waves (VOL) in a specimen (PR),
    - a device (PLA) for generating a polarised and intensity-modulated laser probe (LA), and
    - a device (OL) for focusing the laser probe (LA),
    characterised by
    - a device (PD3, V2, M) for generating a reference signal (REF) of frequency $f_S$, the frequency $f_S$ according to the relationship $f_S = | f_{VOL} - nf_{LA} |$, where n = 1, 2, 3, ..., depending on the frequency $f_{VOL}$ of the elastic waves (VOL) and the modulation frequency $f_{LA}$ of the laser probe (LA),
    - a device (PST, PD1, PD2, DV) for generating a measurement signal dependent on the polarisation of the reflected or transmitted laser radiation (LA'), and
    - a phase-sensitive detector (PDT) to which the reference signal (REF) and the measurement signal are applied.

8. Device according to Claim 7, characterised by a confocal optical system (L1, L2, BL) for detecting the reflected or transmitted laser radiation (LA').

9. Device according to Claim 7 or 8, characterised in that the device for generating a measurement signal dependent on the polarisation of the reflected or transmitted laser radiation (LA') has a polarising beam splitter (PST) to which the reflected or transmitted laser radiation (LA') is applied, two radiation detectors (PD1, PD2) assigned to the component beams generated by the beam splitter (PST), and a differential amplifier (DV) to which the output signals of the radiation detectors (PD1, PD2) are applied.

10. Device according to one of Claims 7 to 9, characterised in that the device for generating a polarised and intensity-modulated laser probe (LA) has an optical pulse generator (PLA).

11. Device according to Claim 10, characterised by a picosecond laser source as optical pulse generator.

12. Device according to one of Claims 7 to 11, characterised in that the device for generating the reference signal (REF) has a radiation detector (PD3) to which the laser probe (LA) is applied and a mixer (M) which is connected on the output side to the reference input of the phase-sensitive detector (PDT), it being the case that an output signal, possibly amplified, of the radiation detector (PD3) is present at a first input of the mixer (M), and an output signal of a signal generator (SG) which triggers the device (IDT) to excite the elastic waves (VOL) is applied to a second input of the mixer (M).

**Revendications**

1. Procédé pour représenter et mesurer des ondes élastiques, selon lequel
    - on déclenche l'apparition d'ondes élastiques (VOL) de fréquence $f_{VOL}$ dans un échantillon (PR),
    - on charge l'échantillon (PR) avec une sonde laser polarisée (LA),
    - on module l'intensité de la sonde laser (LA), la fréquence de modulation $f_{LA}$ étant choisie différente de la fréquence $f_{VOL}$ des ondes élastiques (VOL),
    - on forme un signal de référence (REF) possédant la fréquence $f_S$, la fréquence

$f_S$ satisfaisant à la condition $f_S = |f_{VOL} - nf_{LA}|$ et n désignant un nombre naturel, et

- on détermine d'une manière sensible à la phase la modification, produite par les ondes élastiques (VOL), de la polarisation du faisceau laser (LA') réfléchi sur la sonde (PR) ou transmis par l'échantillon (PR) en utilisant le signal de référence (REF) et on enregistre un signal de mesure correspondant (AS).

2. Procédé suivant la revendication 1, caractérisé par le fait qu'on utilise une optique confocale pour détecter le rayonnement laser réfléchi ou transmis (LA').

3. Procédé suivant la revendication 1 ou 2, caractérisé par le fait qu'on subdivise le rayonnement laser réfléchi ou transmis (LA') en deux faisceaux partiels polarisés perpendiculairement l'un a l'autre et qu'on mesure la différence des intensités des deux faisceaux partiels.

4. Procédé suivant l'une des revendications 1 à 3, caractérisé par le fait qu'on focalise la sonde laser (LA) sur la surface de l'échantillon ou sur un plan (OE), parallèle à la surface de l'échantillon (PR), à l'intérieur de ce dernier, qu'on explore ponctuellement la surface de l'échantillon ou le plan (OE) au moyen de la sonde laser (LA) et qu'on enregistre le signal de mesure (AS) en fonction de l'emplacement.

5. Procédé suivant l'une des revendications 1 à 4, caractérisé par le fait qu'on forme le signal de référence (REF) en mélangeant un premier signal, qui possède la fréquence $f_{VOL}$ des ondes élastiques (VOL) et un second signal, qui possède la fréquence de modulation $f_{LA}$.

6. Procédé suivant la revendication 5, caractérisé par le fait qu'on subdivise la sonde laser (LA) en des premier et second faisceaux partiels, le premier faisceau partiel étant dirigé sur l'échantillon (PA) et le second faisceau partiel sur un détecteur de rayonnement (PD3) et qu'un signal de sortie du détecteur de rayonnement (PD3) détermine le second signal.

7. Dispositif pour représenter et mesurer des ondes élastiques, qui comporte
    - un dispositif (FG, V1, IDT) pour déclencher par excitation des ondes élastiques (VOL) dans un échantillon (PR),
    - un dispositif (PLA) pour produire une sonde laser (LA) polarisée et modulée en intensité, et

    - un dispositif (OL) pour focaliser la sonde laser (LA),
    caractérisé par
    - un dispositif (PD3,V2,M) pour produire un signal de référence (REF) possédant la fréquence $f_S$, cette dernière dépendant, conformément à la relation $f_S = |f_{VOL} - nf_{LA}|$ avec n = 1, 2, 3, ..., de la fréquence $f_{VOL}$ des ondes élastiques (VOL) et de la fréquence de modulation $f_{LA}$ de la sonde laser (LA),
    - un dispositif (PST,PD1,PD2,DV) servant à produire un signal de mesure qui dépend de la polarisation du rayonnement laser réfléchi ou transmis (LA'), et
    - un détecteur (PDT) sensible à la phase et chargé par le signal de référence (REF) et le signal de mesure.

8. Dispositif suivant la revendication 7, caractérisé par un système optique confocal (L1,L2,BL) servant à détecter le rayonnement laser réfléchi ou transmis (LA').

9. Dispositif suivant la revendication 7 ou 8, caractérisé par le fait que le dispositif servant à produire un signal de mesure dépendant de la polarisation du rayonnement laser réfléchi ou transmis (LA') comporte un diviseur de faisceau polarisé (PST), qui est chargé par le rayonnement laser réfléchi ou transmis, deux détecteurs de rayonnement (PD1,PD2) associés aux faisceaux partiels produits par le diviseur de faisceau (PST), et un amplificateur différentiel (DV) chargé par les signaux de sortie des détecteurs de rayonnement (PD1,PD2).

10. Dispositif suivant l'une des revendications 7 à 9, caractérisé par le fait que le dispositif servant à produire une sonde laser (LA) polarisée et modulée en intensité comporte un générateur optique d'impulsions (PLA).

11. Dispositif suivant la revendication 8, caractérisé par une source laser d'une durée d'une picoseconde en tant que générateur optique d'impulsions.

12. Dispositif suivant l'une des revendications 7 à 11, caractérisé par le fait que le dispositif servant à produire le signal de référence (REF) possède un détecteur de rayonnement (PD3), qui est chargé par la sonde laser (LA), et un mélangeur (M), qui est raccordé, côté sortie, à une entrée de référence du détecteur (PDT) sensible à la phase, et qu'un signal de sortie, éventuellement amplifié, du détecteur de rayonnement (PD3) est appliqué à une première entrée du mélangeur (M) et qu'une seconde entrée du mélangeur (M) est chargée par un signal de sortie d'un générateur de signaux (SG) qui commande le dispositif (IDT) servant à exciter les ondes élastiques (VOL).

FIG 1

EP 0 404 984 B1

FIG 2

FIG 3